# EUROPÄISCHE PATENTANMELDUNG

(11) **EP 3 086 025 A1**
(43) Veröffentlichungstag der Anmeldung: **26.10.2016**
(21) Anmeldenummer: 16166039.4
(22) Anmeldetag: 19.04.2016
(51) Int. Cl.: F21V 7/00, F21V 5/04, G02B 17/06, F21W 131/20, G02B 19/00, F21W 131/205

(54) **ABSTRAHLEINHEIT FÜR EINE OPERATIONSLEUCHTE**

(30) Priorität: 20.04.2015 DE 102015106022
(71) Anmelder: Frowein EZH GmbH, 42117 Wuppertal (DE)
(72) Erfinder: Rommel, Michael, 72535 Heroldstatt (DE)
(74) Vertreter: Feder Walter Ebert

(57) **Zusammenfassung**

Die vorliegende Erfindung betrifft eine Abstrahleinheit (1) sowie eine Operationsleuchte (2) mit einer Abstrahleinheit (1) mit einer Lichtquelle (3) und einem der Lichtquelle (3) nachgeschalteten Abstrahlelement (4) zur Erzeugung eines Abstrahlfelds (5), wobei das Abstrahlelement (4) zum Homogenisieren der Leuchtdichteverteilung des Abstrahlfelds (5) derart ausgebildet ist, dass Lichtanteile der Lichtquelle (3) mit einer höheren Lichtstärke in einen weiter außen liegenden Bereich des Abstrahlfelds (5) und Lichtanteile mit einer niedrigeren Lichtstärke in einen weiter innen liegenden Bereich des Abstrahlfelds (5) gelenkt werden.

## Beschreibung

Die vorliegende Erfindung betrifft eine Abstrahleinheit für eine Leuchte mit einer Lichtquelle und einem der Lichtquelle nachgeschalteten Abstrahlelement zur Erzeugung eines Abstrahlfeldes. Die Erfindung betrifft ferner eine Operationsleuchte mit einer Abstrahleinheit.

Derartige Operationsleuchten werden im medizinischen Anwendungsbereich zur Ausleuchtung von Operationsfeldern, zum Beispiel im Rahmen medizinischer Untersuchungen oder chirurgischer Eingriffe eingesetzt.

Das von einer Lichtquelle emittierte Licht kann über das Abstrahlelement in Richtung des Operationsfeldes gelenkt werden, so dass ein Abstrahlfeld erzeugt wird, welches beispielsweise den Spezifikationen für Operationsleuchten entspricht. Zur Lenkung der Lichtstrahlen der Lichtquelle sind verschiedene Ausführungsformen von Abstrahlelementen bekannt, wie beispielsweise TIR-Linsen (total internal reflection).

So ist aus der DE 100 51 464 A1 eine Abstrahleinheit für eine Leuchte bekannt, bei welcher das Licht der Lichtquelle zur Erzeugung eines Abstrahlfeldes über ein nachgeschaltetes Abstrahlelement gelenkt wird. Das dort gezeigte Abstrahlelement ist als eine TIR-Stufenlinse ausgebildet. Die Lichtanteile der Lichtquelle mit einer höheren Lichtstärke werden über eine in der Mitte des Abstrahlelementes angeordnete Linse in Richtung des Abstrahlfeldes gelenkt. Die Lichtanteile mit einer niedrigeren Lichtstärke werden hingegen über einen Reflektorring umgelenkt und so auf einen weiter außen liegenden Bereich der Linse gelenkt. Insgesamt ergibt sich bei dem Abstrahlelement eine Leuchtdichteverteilung, bei welcher das Licht hoher Lichtstärke in der Mitte gebündelt und die Lichtanteile mit niedriger Lichtstärke zu den Rändern hin abgelenkt werden.

Bei solchen Abstrahleinheiten hat es sich jedoch als nachteilig erwiesen, dass aufgrund der Leuchtdichteverteilung ein hoher Gradient der Beleuchtungsstärke auf der Lichtaustrittsfläche des Abstrahlelementes resultiert. Aufgrund dessen können bereits kleine schattenbildende Elemente, wie Instrumente oder die Hand des Operateurs, einen großen Einfluss auf die Beleuchtungseigenschaften der Leuchte haben. So geht ein signifikanter Beitrag zur Beleuchtungsstärke verloren, wenn der innere Bereich des Abstrahlelementes abgeschattet wird.

Vor diesem Hintergrund stellt sich die Erfindung die **Aufgabe**, einen Aufbau mit einer homogeneren Leuchtdichteverteilung anzugeben.

Im Hinblick auf eine Abstrahleinheit der eingangs genannten Art wird die Aufgabe dadurch gelöst, dass das Abstrahlelement zum Homogenisieren der Leuchtdichteverteilung des Abstrahlfeldes derart ausgebildet ist, dass Lichtanteile der Lichtquelle mit einer höheren Lichtstärke in einen weiter außen liegenden Bereich des Abstrahlfeldes und Lichtanteile mit einer niedrigeren Lichtstärke in einen weiter innen liegenden Bereich des Abstrahlfeldes gelenkt werden.

Durch das Lenken der Lichtanteile der Lichtquelle mit einer höheren Lichtstärke in einen weiter außen liegenden Bereich und der Lichtanteile mit einer niedrigeren Lichtstärke in einen weiter innen liegenden Bereich des Abstrahlfelds, kann der Gradient der Beleuchtungsstärke und die Leuchtdichteverteilung positiv beeinflusst werden. Das Abstrahlelement kann hierzu bevorzugt als Linse oder als Reflektor ausgebildet sein. Die Lichtanteile der Lichtquelle mit einer niedrigeren Lichtstärke können auf eine kleinere Lichtabstrahlfläche gelenkt werden, wohingegen die Lichtanteile der Lichtquelle mit einer höheren Lichtstärke auf eine größere Abstrahlfläche gelenkt werden können. Auf diese Weise können die in Hauptabstrahlrichtung emittierten Lichtstrahlen der Lichtquelle mit großer Lichtstärke auf eine größere Fläche verteilt werden, weshalb ein weniger starker Gradient der Beleuchtungsstärke und eine homogenere Leuchtdichteverteilung des Abstrahlfeldes resultiert.

Vorzugsweise erfolgt die Homogenisierung der Leuchtdichteverteilung in einer Abstrahlebene senkrecht zur Hauptabstrahlrichtung der Abstrahleinheit. Die Homogenisierung kann dabei beispielsweise in einer Ebene nahe des Abstrahlelementes, wie in der Ebene einer auf dem Abstrahlelement angeordneten Abdeckplatte stattfinden. Besonders bevorzugt ist jedoch, wenn die Homogenisierung in einer Ebene, welche weiter von der Abstrahleinheit entfernt ist, insbesondere auf der zu beleuchtenden Zielfläche, stattfindet. Besonders bevorzugt kann die Homogenisierung in einer Bezugsebene im Abstand von einem Meter von dem Abstrahlelement stattfinden. Durch die Homogenisierung in einer senkrecht zur Hauptabstrahlrichtung liegenden Abstrahlebene können Hindernisse, wie Instrumente oder der Kopf des Operateurs, hinterleuchtet werden. Auf diese Weise kann die Schattenbildung und damit die Beeinträchtigung der Beleuchtung des Operationsfeldes verringert werden.

Eine bevorzugte Ausgestaltung sieht vor, dass die Lichtquelle als im Wesentlichen punktförmiger Abstrahler ausgebildet ist und die Lichtanteile der Lichtquelle über das Abstrahlelement parallelisiert oder fokussiert werden oder ein leicht divergentes Strahlbündel mit einem Öffnungswinkel von bis zu 20 ° erzeugt wird. Bevorzugt ist die Lichtquelle als LED ausgebildet, wodurch sich ein einfacher und kostengünstiger Aufbau ergibt. Durch einen punktförmigen Abstrahler kann eine gleichmäßige Lichtabstrahlung und damit eine gleichmäßige Lichteinkopplung in das Abstrahlelement erreicht werden. Durch die Parallelisierung oder Fokussierung der Lichtanteile der Lichtquelle oder durch die Erzeugung eines leicht divergenten Strahlbündels kann eine gezielte Leuchtdichteverteilung auf der Zielfläche erreicht werden. Die Lichtstrahlen der Lichtquelle können je nach Anwendung auf die Zielfläche gelenkt werden, wodurch sich eine gute Beleuchtungsstärke des Abstrahlfeldes ergibt. Auf diese Weise kann eine gute Ausleuchtung des Operationsfeldes erreicht werden.

Die Lichtquelle kann eine bestimmte Abstrahlcharakteristik aufweisen, welche unabhängig von dem der Lichtquelle nachgeschalteten Abstrahlelement ist. Üblicherweise werden die Lichtanteile der Lichtquelle mit einer höheren Lichtstärke in Hauptabstrahlrichtung und die Lichtanteile der Lichtquelle mit einer niedrigeren Lichtstärke zur Seite hin abgestrahlt. Auf diese Weise kann eine annähernd ellipsoide Lichtstärkeverteilung der Lichtquelle erreicht werden. Bei einem Halbwertswinkel von 120 ° kann die Lichtstärkeverteilung der Lichtquelle näherungsweise dem Profil eines Lambertschen Strahlers entsprechen. Es sind jedoch auch Lichtquellen denkbar, bei welchen die Lichtanteile mit einer höheren Lichtstärke nicht in Hauptabstrahlrichtung abgestrahlt werden. So sind beispielsweise punktförmige, Cosinus-förmige oder sogenannte "batwing"-förmige Abstrahlcharakteristiken möglich. Die Lichtquelle kann einen Halbwertswinkel zwischen 70° und 160° aufweisen, bevorzugt zwischen 110° bis 130°, besonders bevorzugt jedoch von 120°. Der Halbwertswinkel der Lichtquelle gibt an, in welchem Winkelbereich die Lichtstärke mindestens 50 % der maximalen emittierten Lichtstärke beträgt.

Ferner ist es vorteilhaft, wenn die Lichtanteile der Lichtquelle mit einer höheren Lichtstärke auf eine größere Abstrahlfläche gelenkt werden als die Lichtanteile der Lichtquelle mit einer niedrigeren Lichtstärke. Die Lichtanteile mit einer höheren Lichtstärke können so auf eine größere Fläche verteilt werden, wodurch sich insgesamt ein niedrigerer Gradient der Beleuchtungsstärke und eine homogenere Leuchtdichteverteilung des Abstrahlfeldes ergibt.

In diesem Zusammenhang ist es besonders vorteilhaft, wenn die größere Abstrahlfläche ringförmig und die kleinere Abstrahlfläche ringförmig oder kreisförmig ausgebildet ist. Als Abstrahlflächen können dabei die Flächen bezeichnet werden, aus welchen die modulierten Lichtstrahlen aus dem Abstrahlelement austreten. Alternativ sind auch Ausgestaltungen denkbar, bei welchen die Abstrahlflächen hexagonal, elliptisch, quadratisch oder rechteckig ausgebildet sind. Die Abstrahlflächen können rotationssymmetrisch ausgebildet sein, was sich vorzugsweise daraus ergibt, dass auch das Abstrahlelement bevorzugt rotationssymmetrisch ausgebildet ist. Die Lichtquelle kann dabei auf der Hauptabstrahlachse angeordnet sein, welche sich entlang der Hauptabstrahlrichtung erstreckt. Die Hauptabstrahlachse kann dabei bevorzugt die optische Achse der Abstrahleinheit darstellen. Die größere Abstrahlfläche resultiert durch die nach oben emittierten Lichtanteile der Lichtquelle und die kleinere Abstrahlfläche durch die seitlich emittierten Lichtanteile der Lichtquelle. Die Abstrahlflächen können dabei bevorzugt in einem Verhältnis zwischen 20:1 und 4:1, besonders bevorzugt zwischen 10:1 und 6:1 stehen.

In Weiterbildung der Erfindung sind die Lichtanteile der Lichtquelle mit einer höheren Lichtstärke einer ersten Zone und die Lichtanteile mit einer niedrigeren Lichtstärke einer zweiten Zone zugeordnet. Auf diese Weise können den verschiedenen Zonen der Lichtquelle in dem Abstrahlelement in der jeweiligen Zone unterschiedliche Funktionsprinzipien zugrunde gelegt werden. Die unterschiedlichen Lichtanteile können in den jeweiligen Zonen moduliert werden, so dass sich das Licht der Lichtquelle geeignet auf die Zielfläche lenken lässt. Besonders bevorzugt kann über die erste Zone die Bauhöhe des Abstrahlelementes beeinflusst werden, welche möglichst gering sein sollte.

Weiter vorteilhaft ist es, wenn die Lichtanteile der Lichtquelle mit einer höheren Lichtstärke und die Lichtanteile mit einer niedrigeren Lichtstärke in getrennte Lichtbündel aufgespalten werden. Auf diese Weise können scharfe Kanten an den Übergangsbereichen des Abstrahlelementes vermieden werden. Es entstehen Flächen, welche keine optischen Funktionen besitzen und daher abhängig von den Bedingungen des Fertigungsprozesses geformt werden können. Die getrennten Lichtbündel können dann in der jeweiligen Zone derart moduliert werden, dass sich eine homogene Leuchtdichteverteilung ergibt. Die von der Lichtquelle in Hauptabstrahlrichtung emittierten Lichtstrahlen können dabei zu einem ersten Lichtbündel zusammengefasst werden und die Lichtanteile, welche von der Lichtquelle zur Seite hin emittiert werden, zu einem zweiten Lichtbündel. Die Aufspaltung der Lichtbündel kann somit in ein Lichtbündel mit Lichtanteilen hoher Lichtstärke und in ein Lichtbündel mit Lichtanteilen einer niedrigeren Lichtstärke erfolgen.

Weiter vorteilhaft ist, wenn sich die getrennten Lichtbündel kreuzen. Durch das Kreuzen der zuvor aufgespaltenen Lichtbündel kann eine Art Zonentausch erreicht werden, wodurch das Licht der Lichtquelle mit einem hohen Lichtstrom, welches bevorzugt der ersten Zone zugewiesen ist, in einen weiter außen liegenden Bereich des Abstrahlelementes gelenkt werden kann und die Lichtanteile der Lichtquelle mit einem niedrigeren Lichtstrom, welche bevorzugt der zweiten Zone zugewiesen sein können, in einen weiter innen liegenden Bereich gelenkt werden können. Die zunächst weiter innen liegende erste Zone und die zunächst weiter außen liegende zweite Zone können so durch das Kreuzen der Lichtbündel vertauscht werden. Es ergeben sich eine homogenere Leuchtdichteverteilung sowie ein kleinerer Gradient der Beleuchtungsstärke auf der Abstrahlfläche und/oder der Zielfläche.

Nachdem zuvor auf allgemeinere Eigenschaften der Abstrahleinheit eingegangen worden ist, soll nachfolgend genauer auf die einzelnen Zonen der Lichtquelle, auf die den Zonen zugrunde gelegten Funktionsprinzipien sowie der entsprechenden Modulierung der einzelnen Lichtbündel eingegangen werden.

Bei einer bevorzugten Ausgestaltung werden die Lichtstrahlen des Lichtbündels der ersten Zone an der Umlenkfläche zumindest teilweise oder annähernd senkrecht zur Hauptabstrahlrichtung umgelenkt. Auf diese Weise kann insbesondere die Bauhöhe der Abstrahleinheit beeinflusst werden. Denn durch das Umlenken des Lichtbündels kann das Abstrahlelement flacher ausgebildet sein. Der abgestrahlte Winkelbereich der Lichtquelle mit Lichtanteilen hoher Lichtstärke kann zudem durch das Umlenken auf eine größere Fläche verteilt werden.

Bei einer in diesem Zusammenhang vorteilhaften Ausgestaltung werden die Lichtstrahlen des Lichtbündels der ersten Zone an der Umlenkfläche reflektiert, insbesondere totalreflektiert. Die Umlenkfläche kann hierzu derart ausgebildet sein, dass Lichtstrahlen, die oberhalb des Winkels für Totalreflexion liegen, zumindest teilweise oder annähernd senkrecht zur Hauptabstrahlrichtung reflektiert werden. Wenn die Bedingungen für Totalreflexion erfüllt sind kann der theoretische Reflexionsgrad 100 % betragen. Aufgrund der Totalreflexion ist eine reflexionssteigernde Behandlung der Umlenkfläche, wie eine Verspiegelung oder dergleichen nicht erforderlich. Die Eigenschaft der Totalreflexion kann alleine durch eine geeignete Formgebung der Umlenkfläche und die Wahl des Materials des Abstrahlelementes erreicht werden. Bevorzugt sind das Abstrahlelement und/oder die Umlenkfläche aus Glas, Kunststoff oder einem anderen transparenten Material mit geeignetem Brechungsindex hergestellt. Alternativ kann die Umlenkfläche jedoch auch nach Art eines Spiegels oder als eine anders geartete Reflektorfläche ausgebildet sein.

Besonders bevorzugt ist, wenn die Umlenkfläche für die Lichtstrahlen des Lichtbündels der zweiten Zone durchlässig ist. Die Lichtstrahlen des Lichtbündels der zweiten Zone können dabei in einem Winkel auf die Umlenkfläche treffen, welcher unterhalb des Winkels für Totalreflexion liegt. Die Lichtstrahlen des Lichtbündels der zweiten Zone werden dann nicht an der Umlenkfläche totalreflektiert, sondern können an der Umlenkfläche gebrochen werden und so auf eine kleinere Abstrahlfläche in einen weiter innen liegenden Bereich des Abstrahlelementes gelenkt werden. Die Lichtstrahlen des Lichtbündels der zweiten Zone können durch Brechung an der Umlenkfläche umgelenkt werden. Die Umlenkfläche kann zur Modellierung des Lichtbündels in der zweiten Zone beitragen. Auf diese Weise kann eine Umlenkung der getrennten Lichtbündel auf die gewünschten Abstrahlflächen erfolgen, ohne dass eine gegenseitige Beeinflussung stattfindet.

Um eine Reflexion basierend auf der Totalreflexion erreichen zu können, ist es weiter vorteilhaft, wenn die Umlenkfläche gekrümmt, insbesondere als elliptisches Paraboloid, ausgebildet ist. Durch die Ausbildung der Umlenkfläche als gekrümmte Fläche und insbesondere als elliptisches Paraboloid können die auf die Umlenkfläche auftreffenden Lichtstrahlen des ersten Lichtbündels näherungsweise in ein Parallelbündel transformiert und senkrecht zur Hauptabstrahlrichtung umgelenkt werden. Als Parallelbündel kann dabei ein Lichtbündel verstanden werden, dessen Lichtstrahlen sich in einem Querschnitt durch die optische Achse befinden. Durch eine solche Ausbildung kann eine gute Abbildung eines Punktstrahlers in ein Parallelbündel erreicht werden.

Eine weitere Ausgestaltung der Erfindung sieht eine erste Reflektorfläche zum Umlenken des Lichtbündels der ersten Zone und/oder eine zweite Reflektorfläche zum Umlenken des Lichtbündels der zweiten Zone vor. Die an der Umlenkfläche umgelenkten Lichtstrahlen des ersten Lichtbündels können so ausgerichtet werden, dass sie auf die erste Reflektorfläche gelenkt werden. Die parallelisierten oder fokussierten Lichtstrahlen des ersten Lichtbündels können an der ersten Reflektorfläche erneut umgelenkt und in Richtung des Abstrahlfeldes abgestrahlt werden. Die Lichtstrahlen des ersten Lichtbündels können dabei bevorzugt vor dem Auftreffen auf die erste Reflektorfläche und/oder nach dem Auftreffen auf die erste Reflektorfläche annähernd parallel verlaufen. Ferner kann die Reflektorfläche derart ausgebildet sein, dass die Lichtstrahlen nach der Reflexion in Hauptabstrahlrichtung fokussiert oder kollimiert werden oder ein leicht divergenter Lichtkegel mit einem vollen Öffnungswinkel von bis zu 20 ° erzeugt wird. Die Lichtstrahlen des Lichtbündels der zweiten Zone können auf die zweite Reflektorfläche treffen und an dieser auf einen weiter innen liegenden Bereich des Abstrahlfeldes gelenkt werden. Die Reflektorflächen können reflektierend, und insbesondere totalreflektierend, ausgebildet sein oder verspiegelt ausgebildet sein.

In diesem Zusammenhang ist es bevorzugt, wenn die Umlenkfläche und/oder die erste Reflektorfläche und/oder die zweite Reflektorfläche zumindest in Teilbereichen, bevorzugt vollständig, facettiert ausgebildet ist. Durch die Facettierung der Reflektorflächen lassen sich durch die Wahl der Krümmung und der Größe der einzelnen Facetten nahezu beliebige Lichtverteilungen des Abstrahlfeldes erzeugen. Über die Facetten kann die Lichtquelle auf der Zielfläche abgebildet werden. Durch das Vorsehen mehrerer einzelner Facetten kann eine Überlagerung mehrerer rotierter Lichtquellenbilder erzeugt werden, wodurch Unregelmäßigkeiten der Lichtquellenabstrahlung geglättet werden können. Zudem können Unregelmäßigkeiten wie die Farbtemperatur der Lichtquelle oder Schwankungen der Lichtstärke ausgeglichen werden. Durch die Facetten kann eine homogenere Leuchtdichteverteilung auf dem Abstrahlfeld erreicht werden. Besonders bevorzugt erzeugt jede Facette die gleiche Lichtverteilung, wodurch eine Unabhängigkeit von der Abstrahlcharakteristik der Lichtquelle erreicht werden kann. Weiter vorteilhaft ist, wenn die Anzahl der Facetten der Umlenkfläche der Anzahl der Facetten der ersten Reflektorfläche entspricht und/oder die Anzahl der Facetten der Umlenkfläche größer oder gleich der Anzahl der Facetten der zweiten Reflektorfläche ist. Ein solcher Aufbau kann durch eine geeignete Wahl der Geometrie des Abstrahlelements erreicht werden. Die Facetten der Umlenkfläche und der ersten Reflektorfläche können bevorzugt den gleichen Winkelraum bezüglich der optischen Achse einnehmen, weshalb die Facetten der ersten Reflektorfläche und/oder der zweiten Reflektorfläche größer sind, als die Facetten der Umlenkfläche. Bevorzugt ist, wenn das Abstrahlelement nach dem Prinzip der Köhler-Beleuchtung ausgebildet ist. Mithilfe der Köhler-Beleuchtung kann auf einfache Weise eine homogen ausgeleuchtete Zielfläche erzeugt werden. Besonders bevorzugt kann das Abstrahlelement nach dem Prinzip einer fortgeschrittenen Köhler-Beleuchtung ausgebildet sein. Eine solche fortgeschrittene Köhler-Beleuchtung weist im Allgemeinen einen Kollimator, zwei Mikrolinsenarrays und einen Kondensor auf. Bei der Köhler-Beleuchtung kann das von der Lichtquelle emittierte Licht zunächst mittels des Kollimators gebündelt werden. Danach kann das so entstandene Lichtbündel mit Hilfe der im Strahlengang angeordneten zwei Mikrolinsenarrays in einzelne Lichtkanäle aufgespalten werden. Mit Hilfe des Kondensors können schließlich die einzelnen Lichtkanäle auf der Zielfläche überlagt werden. Ein Abstrahlelement, welches gemäß dem Prinzip der Köhler-Beleuchtung ausgebildet ist, bietet den Vorteil, dass sich eine homogene Ausleuchtung der Zielfläche auch dann erreichen lässt, wenn die Lichtstärke der Lichtquelle Unterschiede sowohl in ihrer spektralen Zusammensetzung als auch hinsichtlich des Abstrahlwinkels aufweist.

Eine vorteilhafte Ausgestaltung sieht vor, dass die erste Reflektorfläche und/oder die zweite Reflektorfläche und/oder die Umlenkfläche als Mikrolinsenarrays ausgebildet sind. Die Facetten der einzelnen Flächen können dabei bevorzugt die Mikrolinsen der einzelnen Mikrolinsenarrays bilden. Die einzelnen Facetten können zueinander parallel angeordnet und in ihren optischen Eigenschaften identisch ausgebildet sein. Im Hinblick auf die fortgeschrittene Köhler-Beleuchtung ist es vorteilhaft, wenn zwei Mikrolinsenarrays hintereinander im Strahlengang angeordnet sind. Besonders bevorzugt ist dabei, wenn die Facetten des ersten Mikrolinsenarrays als Feldfacetten und die Facetten des zweiten Mikrolinsenarrays als Pupillenfacetten ausgebildet sind. Dabei ist es von Vorteil, wenn die Anzahl der Mikrolinsen für die Feld- und Pupillenfacetten gleich groß ist. Die Pupillenfacetten können sich bevorzugt im Fokus der Feldfacetten befinden. Das auf das erste Mikrolinsenarray senkrecht fallende kollimierte Lichtbündel kann je nach Ausgestaltung der Feldfacetten auf das Zentrum des zweiten Mikrolinsenarrays fokussiert werden, wobei der Fokus von schräg einfallenden Lichtbündeln auf die Feldfacetten vom Zentrum einer Mikrolinse verschoben sein kann. Die Pupillenfacetten können die schräg einfallenden Lichtbündel wiederum so umlenken, als wären diese senkrecht auf die Feldfacetten gefallen. Eine solche Anordnung der Pupillenfacetten ermöglicht es, dass auch nicht vollständig kollimierte Strahlkanäle auf der Zielfläche annähernd deckungsgleich überlagert werden können.

In diesem Zusammenhang ist es von Vorteil, wenn die Facetten der ersten Reflektorfläche das zweite Mikrolinsenarray, also die Pupillenfacetten, für die Lichtstrahlen des Lichtbündels der ersten Zone bilden. Die Facetten der zweiten Reflektorfläche können hingegen das erste Mikrolinsenarray, also die Feldfacetten, für die Lichtstrahlen des Lichtbündels der zweiten Zone bilden. Die Facetten können je nach Anwendungsfall unterschiedliche Geometrien aufweisen. Als Ausgangsgeometrie haben sich der Ausschnitt eines Paraboloids oder eines Ellipsoids oder im Spezialfall einer Kugel als vorteilhaft erwiesen. Die Geometrie der einzelnen Facetten kann dabei insbesondere je nach Anwendungsfall und Abstand zur optischen Achse individuell angepasst werden.

Besonders bevorzugt im Zusammenhang mit einer fortgeschrittenen Köhler-Beleuchtung ist, wenn die Umlenkfläche das erste Mikrolinsenarray für die Lichtstrahlen des Lichtbündels der ersten Zone und das zweite Mikrolinsenarray für die Lichtstrahlen des Lichtbündels der zweiten Zone bildet. Die Pupillenfacetten des zweiten Mikrolinsenarrays für die Lichtstrahlen des Lichtbündels der zweiten Zone können dabei zumindest teilweise den Feldfacetten des ersten Mikrolinsenarrays für die Lichtstrahlen des Lichtbündels der ersten Zone entsprechen.

Eine weitere vorteilhafte Ausgestaltung sieht vor, dass das Abstrahlelement mehrere Reflektorringe umfasst. Bevorzugt sind die Reflektorringe in Hauptabstrahlrichtung übereinander angeordnet. Auch die Reflektorringe können einzelne Facetten aufweisen, welche vorteilhaft für jeden Reflektorring die gleiche Größe aufweisen. Sowohl die Größe der Facetten der einzelnen Reflektorringe als auch die Höhe des einzelnen Reflektorrings selbst kann je nach Reflektorring variiert werden.

In vorteilhafter Weise bilden die Seitenflächen der Reflektorringe die Reflektorflächen. Auf diese Weise können sich ebene Reflektorflächen ergeben, welche sich aus mehreren Facetten der einzelnen Reflektorringe zusammensetzen können. Dabei können die Seitenflächen der Reflektorringe, welche der ersten Zone zugeordnet sind, die erste Reflektorfläche und die Seitenflächen der Reflektorringe, welche der zweiten Zone zugeordnet sind, die zweite Reflektorfläche bilden.

Darüber hinaus ist es möglich, dass die Reflektorringe stufenförmig gegeneinander versetzt angeordnet sind. Dabei ist es möglich, dass die der ersten Zone zugeordneten Reflektorringe und/oder die der zweiten Zone zugeordneten Reflektorringe stufenförmig gegeneinander versetzt angeordnet sind. Durch das versetzte Anordnen der Reflektorringe können die Lichtstrahlen des ersten Lichtbündels und/oder die Lichtstrahlen des zweiten Lichtbündels in Nebenbündel unterteilt werden, welche an den unterschiedlich weit von der Lichtquelle angeordneten Seitenflächen der Reflektorringe umgelenkt werden können. Durch die Wahl des Abstandes der Reflektorflächen von der Hauptabstrahlachse des Abstrahlelementes kann die Leuchtdichteverteilung weiter abgestimmt werden. Durch das stufenförmige Anordnen der Reflektorringe kann eine versetzte Strahlführung erreicht werden.

In Weiterbildung der Erfindung nimmt der Durchmesser der Reflektorringe in Richtung der Lichtquelle ab. Auf diese Weise können die an den Reflektorflächen umgelenkten Lichtstrahlen in Richtung des Abstrahlfelds gelenkt werden, ohne sich gegenseitig zu beeinflussen. So können die in Hauptabstrahlrichtung der Lichtquelle weiter vorne liegenden Lichtstrahlen auf einen weiter innen liegenden Bereich und die weiter entfernt liegenden Lichtstrahlen auf einen weiter außen liegenden Bereich gelenkt werden, wodurch sich eine Aufweitung des Abstrahlfeldes und damit eine homogenere Leuchtdichteverteilung erreicht werden kann. Die Lichtstrahlen der Lichtquelle mit einer höheren Lichtstärke können auf eine größere Abstrahlfläche verteilt werden.

Bevorzugt verlaufen die erste Reflektorfläche und/oder die zweite Reflektorfläche gegenüber der Hauptabstrahlrichtung geneigt. Besonders bevorzugt können die Reflektorflächen gerade oder nach Art eines Paraboloids ausgebildet sein. Durch die Wahl des Winkels der Reflektorfläche gegenüber der Hauptabstrahlachse des Abstrahlelementes kann der Austrittswinkel der Lichtstrahlen aus dem Abstrahlelement beeinflusst werden. Bevorzugt sind auch die erste Reflektorfläche und/oder die zweite Reflektorfläche reflektierend, insbesondere total reflektierend ausgebildet. Auf diese Weise kann beeinflusst werden, ob die Lichtstrahlen senkrecht aus dem Abstrahlelement austreten oder in Richtung der Zielfläche fokussiert werden. Auf diese Weise kann eine je nach Bedarf notwendige Beleuchtungsanordnung erzeugt werden.

Besonders bevorzugt ist, wenn die erste Reflektorfläche der zweiten Reflektorfläche in Hauptabstrahlrichtung nachgeordnet ist. Auf diese Weise können die Lichtstrahlen des Lichtbündels der ersten Zone weiter nach außen gelenkt und die Lichtstrahlen des Lichtbündels der zweiten Zone auf einen weiter innen liegenden Bereich des Abstrahlfeldes gelenkt werden. Es ergibt sich zudem ein einfacher Aufbau des Abstrahlelementes, welcher kostengünstig produziert werden kann. Durch die Anordnung der Reflektorflächen hintereinander kann ein flacher Aufbau des Abstrahlelementes erreicht werden.

Gemäß einer konstruktiven Ausgestaltung wird vorgeschlagen, dass der Durchmesser der die erste Reflektorfläche bildenden Reflektorringe größer ist als der Durchmesser, der die zweite Reflektorfläche bildenden Reflektorringe. Die Durchmesser der Reflektorringe können dabei bevorzugt in einem Verhältnis zwischen 5:1 und 2:1, besonders bevorzugt jedoch von 3:1 stehen. Auf diese Weise ergibt sich ein einfacher Aufbau, um die Lichtanteile der Lichtquelle mit einer hohen Lichtstärke in den Randbereich des Abstrahlelementes zu lenken und die Lichtanteile mit einer niedrigeren Lichtstärke in das Zentrum.

Vorzugsweise sind die Lichtanteile der Lichtquelle mit einer höheren Lichtstärke über eine insbesondere sphärisch ausgebildete erste Lichteintrittsfläche und die Lichtanteile mit einer niedrigeren Lichtstärke über eine insbesondere zylindrisch ausgebildete zweite Lichteintrittsfläche einkoppelbar. Der Mittelpunkt der sphärisch ausgebildeten ersten Lichteintrittsfläche kann dabei bevorzugt im Zentrum der Lichtquelle liegen, so dass die ausgesendeten Lichtstrahlen der Lichtquelle möglichst ohne Brechung die Lichteintrittsfläche passieren können. Um die Bauhöhe zu reduzieren kann der Mittelpunkt der sphärisch ausgebildeten Lichteintrittsfläche unterhalb oder oberhalb des Zentrums der Lichtquelle liegen oder flach sein, so dass die Divergenz der ausgesendeten Lichtstrahlen der Lichtquelle verringert werden kann. Die zweite Lichteintrittsfläche kann bevorzugt zylindrisch ausgebildet sein, wodurch das Licht an der Eintrittsfläche gebrochen wird, was zu einer Aufspaltung der Abstrahlung der Lichtquelle in Lichtbündel und damit in eine Aufteilung in die erste und zweite Zone führt. Auf diese Weise können scharfe Kanten an den Übergangsbereichen des Abstrahlelementes vermieden werden. Die Lichteintrittsflächen können im Hinblick auf die Köhler-Beleuchtung insbesondere als Kollimator aufgefasst werden.

Bei einer Operationsleuchte der eingangs genannten Art wird die Aufgabe dadurch gelöst, dass die Abstrahleinheit nach einem der vorhergehenden Ausgestaltungen ausgebildet ist. Hierbei ergeben sich dieselben Vorteile, welche bereits im Zusammenhang mit der Abstrahleinheit beschrieben wurden.

Weitere Einzelheiten und Vorteile der Erfindung sollen nachfolgend anhand der in den Zeichnungen dargestellten Ausführungsbeispiele erläutert werden. Hierin zeigt:
- Fig. 1: eine schematische Darstellung eines Operationsraums mit einer Operationsleuchte,
- Fig. 2: eine schematische Ansicht einer erfindungsgemäßen Abstrahleinheit,
- Fig. 3: einen Teilausschnitt der Abstrahleinheit nach Fig. 2 mit der Darstellung der einzelnen Lichtbündel,
- Fig. 4: eine Schnittdarstellung der erfindungsgemäßen Abstrahleinheit,
- Fig. 5: eine schematische Darstellung der Abstrahlcharakteristik der Lichtquelle,
- Fig. 6: eine schematische Draufsicht der Abstrahleinheit,
- Fig. 7: eine schematische Darstellung der Leuchtdichteverteilung und
- Fig. 8: eine schematische Darstellung des Strahlengangs gemäß der fortgeschrittenen Köhlerbeleuchtung einer erfindungsgemäßen Abstrahleinheit.

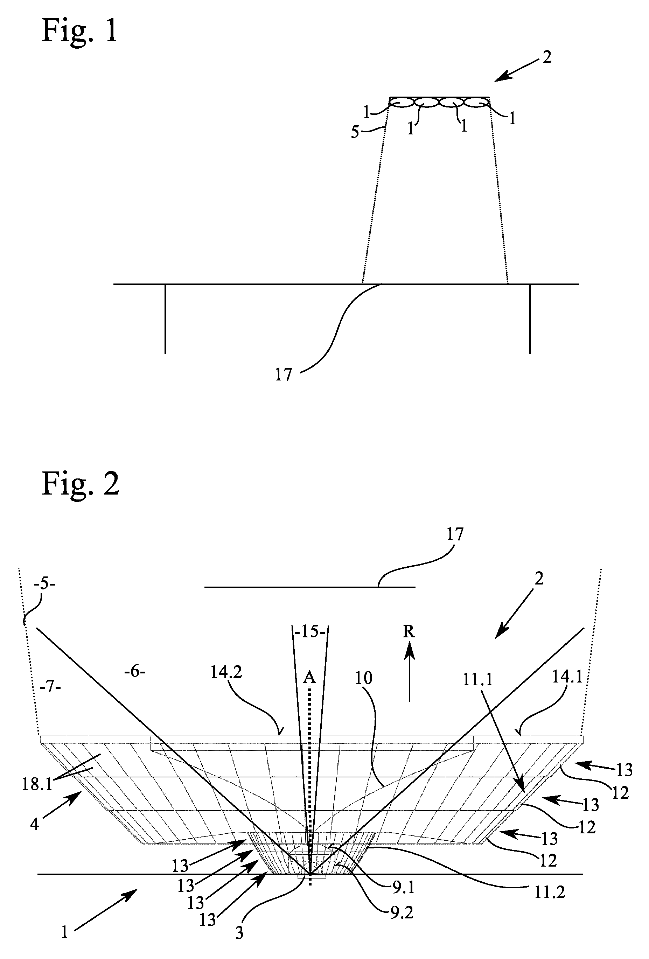

In der Fig. 1 ist eine Operationsleuchte 2 mit mehreren Abstrahleinheiten 1 dargestellt, welche beispielsweise bei chirurgischen Eingriffen zur Ausleuchtung des Operationsfeldes 17 verwendet wird. Die Operationsleuchte 2 kann dabei mehrere nebeneinander liegende Abstrahleinheiten 1 umfassen, welche insbesondere in einem gemeinsamen Gehäuse zusammengefasst sein können.

Die Abstrahleinheit 1 der Leuchte 2 umfasst eine Lichtquelle 3 sowie ein Abstrahlelement 4, vgl. Fig. 2. Das Abstrahlelement 4 ist dabei der Lichtquelle 3 in Hauptabstrahlrichtung R der Lichtquelle 3 nachgeschaltet und dient der Erzeugung eines großen und homogenen Abstrahlfeldes 5, wobei dies insbesondere durch die Homogenisierung in einer Abstrahlebene senkrecht zur Hauptabstrahlrichtung R der Leuchte 2 erreicht werden kann. Das Abstrahlelement 4 ist dabei der Lichtquelle 3 in dem Sinne nachgeschaltet, als dass das Licht von der Lichtquelle 3 zunächst emittiert und dann in das Abstrahlelement 4 eingekoppelt, in diesem moduliert, wieder ausgekoppelt und dann in Richtung der Zielfläche 17 gelenkt wird. So ist zum einen eine homogene Leuchtdichteverteilung auf der Zielfläche 17 als auch direkt an den Abstrahlflächen 14.1, 14.2 der Abstrahleinheit 1 gewünscht. Mittels des Abstrahlelementes 4 kann das von der Lichtquelle 3 emittierte Licht in Richtung der Zielfläche 17 des Operationsfeldes gelenkt, parallelisiert und/oder fokussiert werden.

Die Hauptabstrahlrichtung R der Abstrahleinheit 1 ergibt sich durch die Hauptabstrahlrichtung R der Lichtquelle 3. Da das Licht der Lichtquelle 3 eine Vorzugsrichtung aufweist, wird durch diese die Hauptabstrahlrichtung R definiert. Die Hauptabstrahlrichtung R kann alternativ auch über die Flächennormale der Unterseite des Gehäuses oder des Halbleiterchips definiert werden. Darüber hinaus weist das von der Abstrahleinheit 1 emittierte Licht ebenfalls eine Hauptabstrahlrichtung R auf, welche in Richtung der Zielfläche 17 gerichtet ist. Die Abstrahleinheit 1 weist ferner eine optische Achse A auf, also die Achse, die mit der Symmetrieachse der Einzelelemente übereinstimmt. Die optische Achse A der Abstrahleinheit 1 wird vorliegend also durch die Lichtquelle 3 und das Abstrahlelement 4 gebildet. Lichtquelle 3 und Abstrahlelement 4 liegen daher auf einer gemeinsamen Achse A.

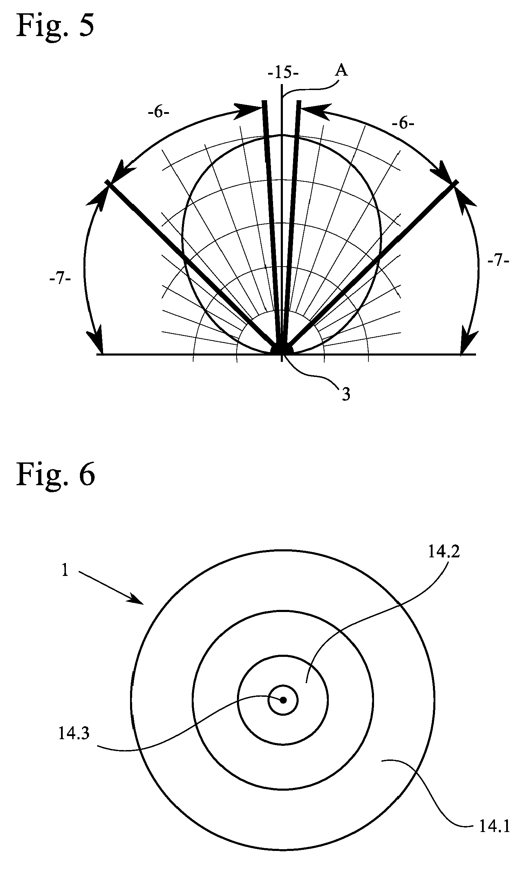

Im Ausführungsbeispiel ist die Lichtquelle 3 als eine LED-Lichtquelle ausgebildet, welche eine bestimmte Abstrahlcharakteristik aufweist, vgl. Fig. 5. Durch das Abstrahlelement 4 soll der Einfluss dieser Abstrahlcharakteristik minimiert werden, um so eine zu starke Bindung an einen Lichtquellentyp zu vermeiden und um auf weiterentwickelte Lichtquellen 3 umsteigen zu können. Die Lichtquelle 3 kann entweder als einzelne Leuchtdiode einer bestimmten Farbtemperatur, wie etwa warm-weiß, neutral-weiß oder kalt-weiß, als farbige LED oder aber als LED-Modul ausgebildet sein. Bevorzugt ist dabei wenn die Farbetemperatur (CCT) der Lichtquelle 3 in einem Bereich zwischen 3.300 K und 5.500 K liegt.

Ein solches LED-Modul umfasst mehrere Leuchtdioden aus einem Festkörperhalbleiter, welche in einem gemeinsamen Gehäuse angeordnet sind. Das LED-Modul wiederum kann einen oder mehrere Leuchtdioden-Chips umfassen, welche direkt auf eine Leiterplatte angeordnet sind. Bei einem solchen LED-Modul können verschiedenfarbige LEDs zum Einsatz kommen. Im Ausführungsbeispiel findet ein LED-Modul Anwendung, welches als Multi-Chip-LED ausgebildet ist und insgesamt vier einzelne LEDs mit den Farben warm-weiß, kalt-weiß, rot und grün aufweist. Der grüne und der rote Halbleiterchip werden allerdings nicht mit voller Leistung betrieben, da sie nur dazu dienen die Farbwiedergabewerte zu verbessern. Besonders bevorzugt liegt der generierte Lichtstrom abhängig von der gewünschten Farbtemperatur zwischen 40 lm und 4000 lm, bevorzugt jedoch im Bereich zwischen 180 lm und 500 lm.

Die Lichtquelle 3 kann in direkter Nähe zu den Lichteintrittsflächen 9.1, 9.2 des Abstrahlelements 4 angeordnet sein. So kann das Abstrahlelement 4 im Bereich der Lichtquelle 3 eine Ausnehmung aufweisen, in welche die Lichtquelle 3 eintauchen kann. Die Lichtquelle 3 und das Abstrahlelement 4 können zudem, beispielsweise über einen gemeinsamen Träger, miteinander verbunden werden. Darüber hinaus kann bei der Abstrahleinheit 1 ferner ein Lichtleitstab vorgesehen sein, welcher entweder ein separates Bauteil darstellt oder mit dem Abstrahlelement 4 eine Einheit bildet. Dieser kann zwischen der Lichtquelle 3 und dem Abstrahlelement 4 angeordnet sein. In diesem Fall kann, um beispielsweise Farbschattenbildungen zu verhindern, eine Mischung des Lichtes der einzelnen Lichtquellen 3 in dem Lichtleitstab stattfinden.

Wie dies der Fig. 5 zu entnehmen ist, weist die Lichtquelle 3 eine definierte Abstrahlcharakteristik auf, welche einerseits abhängig ist von den verschiedenen verwendeten Leuchtdioden als auch von den einzelnen Produkten verschiedener Hersteller. Die Abstrahlcharakteristik der Lichtquelle 3 weist eine Vorzugsrichtung auf, welche in Hauptabstrahlrichtung R gerichtet ist. Aufgrund dessen wird mehr Licht der Lichtquelle 3 nach vorne als zur Seite hin abgestrahlt. Im Ausführungsbeispiel weist die Lichtquelle 3 einen Halbwertswinkel von 120° auf. Dieser Winkel gibt an, in welchem Winkelbereich die Lichtstärke mindestens 50 % der maximalen emittierten Lichtstarke beträgt. Alternativ können jedoch auch Lichtquellen 3 mit einem anderen Halbwertswinkel verwendet werden, etwa zwischen 70° und 160°.

Entsprechend der Abstrahlcharakteristik der Lichtquelle 3 werden die Lichtanteile mit einer höheren Lichtstärke in Hauptabstrahlrichtung R emittiert, wohingegen Lichtanteile mit einer niedrigeren Lichtstärke zur Seite hin abgestrahlt werden. Die von der Lichtquelle 3 emittierten Lichtanteile lassen sich in drei Zonen 6, 7 und 15 unterteilen, vgl. Fig. 5.

Die erste Zone 6 umfasst dabei die Lichtanteile der Lichtquelle 3 mit einer hohen Lichtstärke, wohingegen die zweite Zone 7 die Lichtanteile der Lichtquelle 3 mit einer niedrigeren Lichtstärke umfasst. Die dritte Zone 15 ist eher von untergeordneter Bedeutung. Denn erfindungsgemäß können über das Abstrahlelement 4 die Lichtanteile der Lichtquelle 3 mit einer höheren Lichtstärke, welche insbesondere der ersten Zone 6 zugwiesen sind, in einen weiter außen liegenden Bereich des Abstrahlfeldes 5 und die Lichtanteile mit einer niedrigeren Lichtstärke, welche insbesondere der zweiten Zone 7 zugeordnet sind, in einen weiter innen liegenden Bereich des Abstrahlfeldes 5 gelenkt werden.

In den jeweiligen Zonen 6, 7 können dem Abstrahlelement 4 verschiedene Funktionsprinzipien zugrunde gelegt werden, wie das Licht der Lichtquelle 3 auf die Zielfläche 17 gelenkt wird. Die Lichtanteile der Lichtquelle 3 werden daher beim Eintreten in das Abstrahlelement 4 über die Lichteintrittsflächen 9.1, 9.2 in getrennte Lichtbündel 8.1, 8.2 aufgespalten, um diese so für die einzelnen Zonen 6, 7 gezielt nutzbar machen zu können. Die Lichteintrittsflächen 9.1, 9.2 können daher als eine Art zweigeteilter Kollimator aufgefasst werden.

In einer möglichen Ausführungsform ist die Lichteintrittsfläche 9.1 hierzu sphärisch ausgebildet, wobei der Mittelpunkt der sphärischen Fläche 9.1 im Zentrum der Lichtquelle 3 liegt, wodurch die Lichtanteile der insbesondere als punktförmige Abstrahler ausgebildeten Lichtquelle 3 beim Eintreten in das Abstrahlelement 4 nicht gebrochen werden. In einer anderen Ausführungsform ist die Lichteintrittsfläche 9.1 eher flach ausgebildet, d. h. der Radius der Sphäre geht gegen unendlich. Alternativ oder zusätzlich kann der Lichteintrittsfläche 9.1 eine optische Funktion zugewiesen werden, in dem das Zentrum der sphärischen Oberfläche nicht im Zentrum der Lichtquelle 3 liegt. Auf diese Weise kann die Divergenz des Strahlenbündels vergrößert oder verringert werden. Bevorzugt wird der Divergenzwinkel verringert, was zu einer Reduktion der Bauhöhe führt. Die Lichteintrittsfläche 9.2 stellt hingegen eine Zylinderfläche dar, weshalb das Licht der Lichtquelle 3 an dieser gebrochen wird. Auf diese Weise kann die Aufspaltung in zwei Lichtbündel 8.1, 8.2 erfolgen, welche dann jeweils den Zonen 6, 7 moduliert werden können. Das Lichtbündel 8.1. ist dabei der ersten Zone 6 zugeordnet, wohingegen das Lichtbündel 8.2 der zweiten Zone 7 zugeordnet ist. Durch die Brechung der Lichtstrahlen an der Lichteintrittsfläche 9.2 werden scharfe Kanten an den Übergangsbereichen des Abstrahlelements 4 vermieden, da Flächen entstehen, welche keine optische Funktion besitzen und abhängig von den Bedingungen des Fertigungsprozesses geformt werden können.

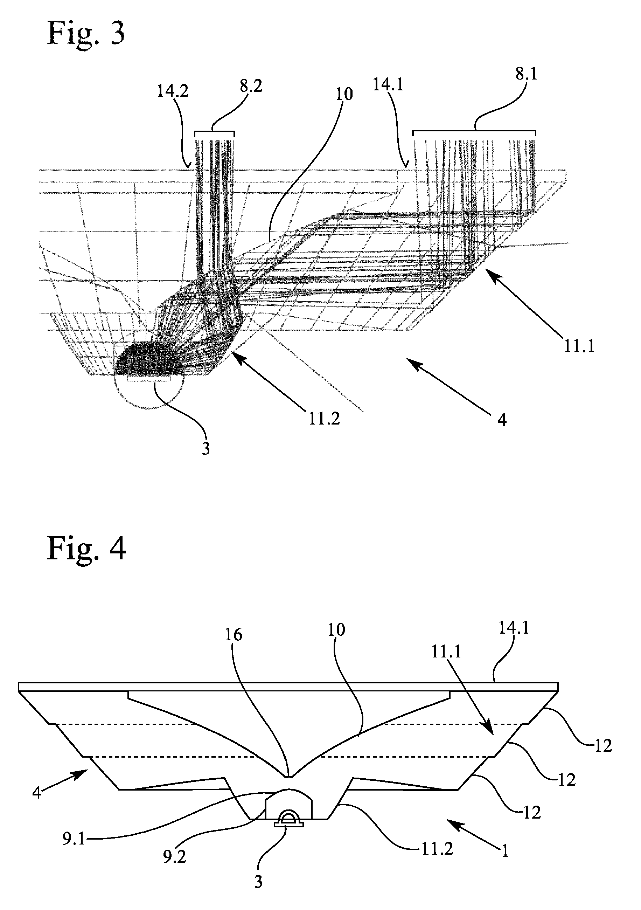

Die erste Zone 6 ist dabei insbesondere für die Bauhöhe des Abstrahlelementes 4 und damit der gesamten Abstrahleinheit 1 verantwortlich. Wie dies der Darstellung in der Fig. 3 zu entnehmen ist, werden in der Zone 6 die Lichtstrahlen des ersten Lichtbündels 8.1, welche die Lichtanteile der Lichtquelle 3 mit einer hohen Lichtstärke umfassen, zunächst an einer Umlenkfläche 10 zumindest teilweise senkrecht oder annähernd senkrecht zur Hauptabstrahlrichtung R umgelenkt. Die Umlenkfläche 10 ist dabei derart ausgebildet, dass die Lichtstrahlen des Lichtbündels 8.1 an dieser reflektiert und insbesondere totalreflektiert werden. Die Lichtstrahlen des Lichtbündels 8.1 weisen dabei beim Austreten aus der Lichteintrittsfläche 9.1 einen Winkel oberhalb des Winkels für Totalreflexion auf, weshalb eine Umlenkung stattfinden kann. Alternativ kann die Umlenkfläche 10 auch beispielsweise als Spiegelfläche oder als sonstige Reflektorfläche ausgebildet sein. Dabei ist jedoch darauf zu achten, dass auch dann die Lichtstrahlen des Lichtbündels 8.1 nahezu horizontal umgelenkt werden.

Die Umlenkfläche 10 ist im Ausführungsbeispiel gekrümmt ausgebildet, insbesondere in der Form eines elliptischen Paraboloids. Die Orientierung der Umlenkfläche 10 ist dabei derart gewählt, dass die Lichtstrahlen des Lichtbündels 8.1, welche oberhalb des Winkels für Totalreflexion liegen, zumindest teilweise senkrecht zur Hauptabstrahlrichtung R abgelenkt werden. Eine weitere Eigenschaft der Umlenkfläche 10 besteht zudem darin, dass sie für die Lichtstrahlen des zweiten Lichtbündels 8.2 durchlässig ist. Auf diese Eigenschaft wird aber nachfolgend noch genauer einzugehen sein.

Wie dies ebenfalls der Fig. 3 zu entnehmen ist, werden die an der Umlenkfläche 10 umgelenkten Lichtstrahlen des Lichtbündels 8.1 erneut an einer ersten Reflektorfläche 11.1 in Hauptabstrahlrichtung R umgelenkt. Auch die erste Reflektorfläche 11.1 zum Umlenken des Lichtbündels 8.1 der ersten Zone 6 ist im Ausführungsbeispiel reflektierend insbesondere totalreflektierend ausgebildet. Auf diese Weise können die Lichtstrahlen einer als Punktstrahler ausgebildeten Lichtquelle 3 auf einfache Weise in ein nahezu paralleles Lichtbündel 8.1 transformiert werden. Unter einem Punktstrahler sollen dabei auch Lichtquellen 3 verstanden werden, welche auch als Flächenstrahler mit einer Chipfläche von weniger als 4 mm², bevorzugt mit einer Chipfläche von weniger als 1 mm² bezeichnet werden können.

Durch die Umlenkung der Lichtstrahlen des ersten Lichtbündels 8.1 an der Umlenkfläche 10 und der Reflektorfläche 11.1 können die Lichtstrahlen des Lichtbündels 8.1 auf eine größere Abstrahlfläche 14.1 gelenkt werden. Im Gegensatz zu bekannten Abstrahlelementen 4 werden insoweit die Lichtanteile der Lichtquelle 3 mit einer höheren Lichtstärke in den Randbereich des Abstrahlelements 4 gelenkt und auf eine größere Abstrahlfläche 14.1 projiziert. Auf diese Weise ergeben sich ein geringerer Beleuchtungsgradient und damit eine homogenere Leuchtdichteverteilung des Abstrahlfelds 5.

Im Gegensatz zu den Lichtstrahlen der ersten Zone 6 werden die Lichtstrahlen der zweiten Zone 7 an der Lichteintrittsfläche 9.2 gebrochen. Das über die Lichteintrittsfläche 9.2 eintretende Lichtbündel 8.2 wird jedoch nicht in Richtung der Umlenkfläche 10 gelenkt, sondern in Richtung einer zweiten Reflektorfläche 11.2. An der Reflektorfläche 11.2 findet ähnlich wie bei der ersten Reflektorfläche 11.2 eine Reflexion statt, wobei die Reflektorfläche 11.2 derart ausgebildet ist, dass die Lichtstrahlen des Lichtbündels 8.2 nach dem Umlenken an der Reflektorfläche 11.2 an der Umlenkfläche 10 einen Winkel unterhalb des Winkels für Totalreflexion aufweisen. Auf diese Weise ist es möglich, dass die Lichtanteile mit einer niedrigeren Lichtstärke in Form des Lichtbündels 8.2 durch die Umlenkfläche 10 hindurchtreten können.

Es ist hervorzuheben, dass aufgrund der unterschiedlichen Winkel der Lichtstrahlen der Lichtbündel 8.1, 8.2 ein Kreuzen der Lichtbündel 8.1, 8.2 möglich ist. Zwar findet eine Brechung an dieser Grenzfläche 10 statt, allerdings kann die resultierende Brechung im Voraus durch die Reflektorfläche 11.2 kompensiert werden. Dieser Brechungswinkel kann bereits bei der Ausgestaltung der Reflektorfläche 11.2 berücksichtigt werden, so dass sichergestellt werden kann, dass das Lichtbündel 8.2 nach der Brechung an der Umlenkfläche 10 nahezu parallel zur Hauptabstrahlrichtung R der Abstrahleinheit 1 verläuft. Die Lichtanteile des Lichtbündels 8.2 der zweiten Zone 7 werden dabei im Gegensatz zu den Lichtanteilen des Lichtbündels 8.1 der ersten Zone 6 auf eine kleinere Abstrahlfläche 14.2 gelenkt.

Die Reflektorflächen 11.1, 11.2 verlaufen gegenüber der Hauptabstrahlrichtung R geneigt, wodurch sich die Lichtanteile der Lichtquelle 3 abhängig von der Wahl des Winkels der Reflektorflächen 11.1, 11.2 die Lichtstrahlen parallelisieren oder fokussieren lassen. Wie dies ebenfalls den Figuren zu entnehmen ist, ist die erste Reflektorfläche 11.1 der zweiten Reflektorfläche 11.2 in Hauptabstrahlrichtung R nachgeordnet.

Die dritte Zone 15 ergibt sich aus den Limitierungen des Herstellungsprozesses des Abstrahlelementes 4. Denn im Idealfall sollte sich die dritte Zone 15 in der ersten Zone 6 erstrecken, was zu einer unendlich dünnen Mulde führen würde. Da dies aufgrund des Herstellungsprozesses jedoch nicht möglich ist, ist es erforderlich, diese dritte Zone 15 vorzusehen. Das Licht der Lichtquelle 3 tritt in der dritten Zone 15 über eine Lichteintrittsfläche 9.1 in das Abstrahlelement 4 ein, wobei die Lichtstrahlen nicht an der Fläche 9.1 gebrochen werden. Um die Lichtstrahlen der dritten Zonen 15 entsprechend den Vorgaben für die Leuchte 2 lenken zu können, ist bei dem Abstrahlelement 4 eine zusätzliche Linse 16 vorgesehen, bei welcher entweder die Ein- oder die Austrittsfläche gekrümmt ausgebildet ist. Alternativ kann es sich bei der Linse 16 auch um eine Linsenkombination handeln, bei welcher sowohl die Eintritts- als auch die Austrittsfläche gekrümmt ausgebildet ist. Auf diese Weise werden die Lichtstrahlen der dritten Zone 15 auf die Zielfläche 17 gelenkt und die Lichtquelle 3 auf dieser abgebildet. Allerdings trägt die dritte Zone 15 nur zu einem sehr geringen Teil zu der Gesamtbeleuchtungsstärke der Abstrahleinheit 1 bei. Anstelle einer Linse 16 kann die Fläche auch planar ausgebildet sein und Zone 15 so klein ausgelegt werden, wie es der Herstellungsprozess erlaubt.

Wie dies die Fig. 6 zeigt, ist die Abstrahlfläche 14.1 für die Lichtanteile der Lichtquelle 3 mit einer höheren Lichtstärke größer als die Abstrahlfläche 14.2 für die Lichtanteile der Lichtquelle 3 mit einer niedrigeren Lichtstärke. Da sowohl das Abstrahlelement 4 als auch die gesamte Abstrahleinheit 1 rotationssymmetrisch ausgebildet sind, ergibt sich eine insgesamt ringförmige Aufteilung der Abstrahlflächen 14.1 und 14.2. Je nach Ausgestaltung der Reflektorfläche 11.2 des Abstrahlelementes 4 in der zweiten Zone 7 können die Lichtstrahlen des Lichtbündels 8.2 parallelisiert oder fokussiert oder leicht divergent aus der Abstrahlfläche 14.2 austreten, so dass sich entweder eine ringförmige oder eine kreisförmige Abstrahlfläche 14.2 ergibt. Das Licht der dritten Zone 15 tritt über die kleinste Lichtabstrahlfläche 14.3 der Abstrahleinheit 1 aus, welche insgesamt punktförmig ausgebildet ist.

Wie dies ferner den Fig. 2, 3 oder 6 zu entnehmen ist, umfasst das Abstrahlelement 4 mehrere Reflektorringe 13, welcher in Hauptabstrahlrichtung R übereinander angeordnet sind. Der Durchmesser des der Lichtquelle 3 am nächsten liegenden Reflektorrings 13 ist dabei kleiner als der Durchmesser der weiter entfernt angeordneten Reflektorringe 13, weshalb der Durchmesser des Abstrahlelementes 4 insgesamt in Richtung der Lichtquelle 3 abnimmt. Die Seitenflächen 12 der Reflektorringe 13 bilden dabei die Reflektorflächen 11.1, 11.2 der ersten Zone 6 und/oder der zweite Zone 7.

Wie dies beispielsweise den Darstellungen in den Fig. 2, 3 und 8 zu entnehmen ist sind die Reflektorflächen 11.1, 11.2 sowie die Umlenkfläche 10 zumindest in Teilbereichen facettiert ausgebildet, wobei im Ausführungsbeispiel die einzelnen Reflektorringe 13, die Reflektorfläche 11.2 und die Umlenkfläche 10 unterschiedlich facettiert sind. Jeder Reflektorring 13 besteht dabei aus einer aneinander Reihung einzelner Facetten 18.1, wobei die Größe der Facetten 18.1 sich abhängig vom jeweiligen Reflektorring 13 unterscheiden kann. Über die Facetten 18.1, 18.2, 18.3 kann die Leuchtdichteverteilung weiter homogenisiert werden. Um die Leuchtdichteverteilung dabei weitestgehend unabhängig von der verwendeten Lichtquelle 3 zu gestalten, ist es erforderlich, dass jeder Reflektorring 13 die gleiche Lichtverteilung erzeugt. Alternativ kann die von einem Reflektorring 13 erzeugte Lichtverteilung für jeden Reflektorring 13 unterschiedlich sein. So sind die Facetten 18.1 der Reflektorringe 13 der ersten Zone 6 derart ausgelegt, dass diese ein kleineres Abstrahlfeld 5 erzeugen als die der zweiten Zone 7. Verändern sich daher die Verhältnisse des von der Lichtquelle 3 emittierten Lichtes in den einzelnen Zonen 6, 7, 15 verändern sich dementsprechend auch die Größenverhältnisse des Abstrahlfelddurchmessers.

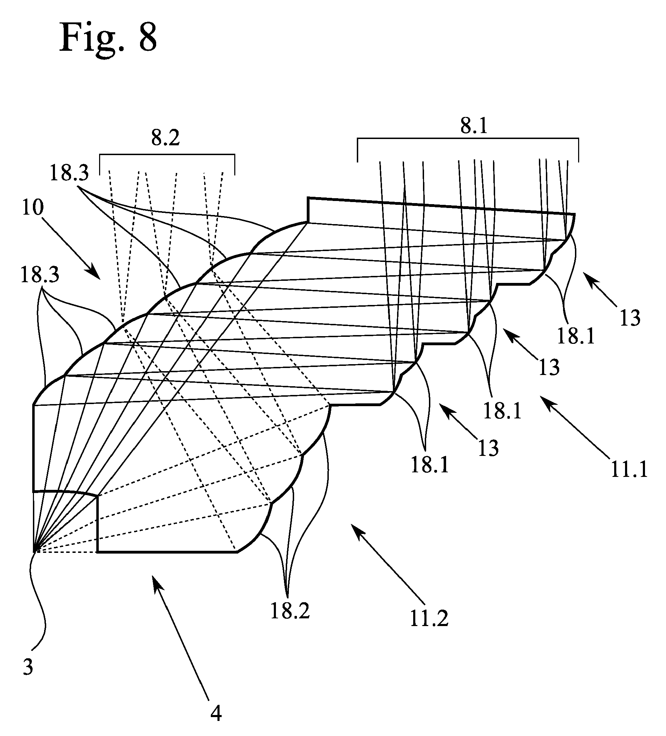

Das Abstrahlelement 4 ist nach dem Prinzip der sogenannten Köhler-Beleuchtung ausgebildet, wobei die Facetten 18.1, 18.2, 18.3 die optische Funktion aufweisen, die Lichtverteilung weiter zu homogenisieren. Zur Verdeutlichung dieses Funktionsprinzips zeigt die Fig. 8 exemplarisch einen Strahlengang innerhalb des Abstrahlelements 4. Wie dies das Ausführungsbeispiel in Fig. 8 zeigt, weisen die Reflektorringe 13 der ersten Reflektorfläche 11.1 jeweils zwei Facetten 18.1, die Reflektorfläche 11.2 drei Facetten 18.2 und die Umlenkfläche 10 sechs Facetten 18.3 in vertikaler Richtung auf. Die Anzahl der Facetten 18.1, 18.2, 18.3 ist jedoch nicht auf diese gezeigte Anzahl beschränkt. Vielmehr ist lediglich zu beachten, dass die Anzahl der Facetten 18.3 der Umlenkfläche der Anzahl der Facetten 18.1 der Reflektorringe 13 der ersten Reflektorfläche 11.1 entspricht. Des Weiteren ist die Anzahl der Facetten 18.2 der zweiten Reflektorfläche 11.2 kleiner oder gleich groß zu wählen, als die Anzahl der Facetten 18.3 der Umlenkfläche 10.

Eine fortgeschrittene Köhler-Beleuchtung, so wie diese bei der Erfindung Anwendung findet, umfasst in der Regel einen Kollimator, zwei im Strahlengang aufeinanderfolgend angeordnete Mikrolinsenarrays sowie einen Kondensor. Die Mikrolinsenarrays werden im Ausführungsbeispiel durch drei verschiedene Flächen gebildet, nämlich die erste Reflektorfläche 11.2, die zweite Reflektorfläche 11.2 sowie die Umlenkfläche 10. Das erste Mikrolinsenarray umfasst dabei die sogenannten Feldfacetten, wohingegen das zweite Mikrolinsenarray die sogenannten Pupillenfacetten aufweist.

Es ist die Aufgabe der ersten Mikrolinsenarrays, die Lichtbündel 8.1, 8.2 in einzelne Lichtkanäle aufzuspalten und auf das jeweils entsprechende zweite Mikrolinsenarray zu fokussieren. Das erste Mikrolinsenarray für das seitlich abgestrahlte Lichtbündel 8.2 wird im Ausführungsbeispiel von der zweiten Reflektorfläche 11.2 gebildet. Bei den Facetten 18.2 handelt es sich somit um Feldfacetten, welche derart ausgebildet, dass der Fokus der auf eine Feldfacette 18.2 fallenden Lichtkanäle auf den Pupillenfacetten 18.3 liegt. Das erste Mikrolinsenarray für das vorwärtsabgestrahlte Lichtbündel 8.1 wird hingegen von der Umlenkfläche 10 gebildet. Für das Lichtbündel 8.1 bilden insoweit die Facetten 18.3 die Feldfacetten. Diese fokussieren die Lichtkanäle des Lichtbündels 8.1 auf die radial weiter außen liegenden Pupillenfacetten 18.1 der ersten Reflektorfläche 11.1. Der Fokus kann dabei ebenfalls im Zentrum einer Pupillenfacette 18.1 liegen oder zur weiteren Lichtführung vom Zentrum verschoben sein.

Durch die Kreuzung der Lichtbündel 8.1, 8.2 bildet die Umlenkfläche 10 nicht nur das erste Mikrolinsenarray für das Lichtbündel 8.1, sondern zusätzlich auch das zweite Mikrolinsenarray für das Lichtbündel 8.2. Die Pupillenfacetten des zweiten Mikrolinsenarrays für das Lichtbündel 8.2 entsprechen dabei zumindest teilweise den Feldfacetten des ersten Mikrolinsenarrays für das Lichtbündel 8.1. Das zweite Mikrolinsenarray für das Lichtbündel 8.1 wird durch die erste Reflektorfläche 11.1 gebildet. Neben einer Fokussierung auf die Pupillenfacetten kann der Fokus der Lichtkanäle des Lichtbündels 8.2 zusätzlich auch nicht im Zentrum der Pupillenfacette 18.3 liegen. Die Position des Fokus wird dann derart gewählt, dass die Lichtkanäle des Lichtbündels 8.2 zusätzlich an den Pupillenfacetten 18.3 gebrochen werden. Im Gegensatz zu den Lichtkanälen des Lichtbündels 8.2 werden die Lichtkanäle des Lichtbündels 8.1 an den Pupillenfacetten insbesondere durch Totalreflektion reflektiert und nicht gebrochen. Für das Lichtbündel 8.2 ergeben sich durch die Anzahl der Facetten 18.2 drei Lichtkanäle und für das Lichtbündel 8.1 durch die Anzahl der Facetten 18.3 sechs Lichtkanäle.

Um eine Aufteilung der Lichtbündel 8.1, 8.2 in kleinere Nebenbündel erreichen zu können, können die einzelnen Reflektorringe 13 stufenförmig gegeneinander versetzt angeordnet sein, wodurch sich die Aufteilung der Lichtanteile der Lichtbündel 8.1, 8.2 auf eine größere Abstrahlfläche 14.1, 14.2 erreichen lässt. Der Durchmesser der die erste Reflektorfläche 11.1 bildenden Reflektorringe 13 ist dabei größer als der Durchmesser der die zweite Reflektorfläche 11.2 bildenden Reflektorringe 13. Bevorzugt stehen die Reflektorringe 13 dabei ca. in einem Verhältnis von 3:1.

Die Abstrahlfläche 14.1 des Abstrahlelementes 4 kann in einer möglichen Ausführungsform flach ausgebildet sein, so dass möglichst keine Brechungen an der Grenzfläche auftreten. Alternativ kann die Abstrahlfläche 14.1 auch sphärisch, asphärisch oder durch eine Freiformfläche gekrümmt sein, wobei eine sphärische Fläche stabiler ist als eine planare Fläche. Die Abstrahlfläche 14.1 verläuft gegenüber der Hauptabstrahlrichtung A senkrecht. Dies ist jedoch nicht in jedem Fall erforderlich. Alternativ kann die Fläche 14.1 auch zumindest in Teilbereichen partiell geneigt, gekrümmt oder strukturiert sein, so dass sich eine weitere gezielte Lichtführung der Lichtstrahlen der Lichtquelle 3 ergibt. Die Abstrahlflächen 14.1, 14.2 können als Kondensor dienen, so dass sich die einzelnen Lichtstrahlen des Lichtbündels 8.1 zusammen mit den Lichtstrahlen des Lichtbündels 8.2 auf der Zielfläche 17 überlagen. Durch eine zusätzliche Abdeckplatte oberhalb der Abstrahlflächen 14.1, 14.2 (und 14.3) lassen sich die erzeugten Lichtverteilungen auf der Zielfläche 17 filtern.

Insgesamt lässt sich der Weg der Lichtstrahlen wie folgt beschreiben: Die von der Lichtquelle 3 emittierten Lichtstrahlen werden über die Lichteintrittsflächen 9.1, 9.2 in das Abstrahlelement 4 der Abstrahleinheit 1 eingekoppelt, d.h. das Licht der Lichtquelle 3 tritt in das Abstrahlelement 4 ein. Durch die beiden verschieden ausgebildeten Lichteintrittsflächen 9.1, 9.2 findet eine Aufspaltung des Lichtes in zwei getrennte Lichtbündel 8.1, 8.2 statt. Das erste Lichtbündel 8.1 umfasst die Lichtanteile der Lichtquelle 3 mit einer hohen Lichtstärke und kann der ersten Zone 6 des Abstrahlelements zugeordnet werden. Das zweite Lichtbündel 8.2 umfasst hingegen die Lichtanteile mit einer niedrigeren Lichtstärke und ist der zweiten Zone 7 zugeordnet. Die Unterteilung des Abstrahlelements 4 in Zonen 6, 7 ist aufgrund der diesen Zonen zugrundeliegenden unterschiedlichen Funktionsprinzipien sinnvoll.

Die Lichtstrahlen des ersten Lichtbündels 8.1 werden nach dem Einkoppeln zunächst an der Umlenkfläche 10 senkrecht zur Hauptabstrahlrichtung und dann erneut an der ersten Reflektorfläche 11.1 in Richtung der Zielfläche 17 gelenkt. Auf diese Weise können die Lichtstrahlen des ersten Lichtbündels 8.1 auf eine größere Abstrahlfläche 14.1 verteilt werden. Die Lichtstrahlen des zweiten Lichtbündels 8.2 nehmen hingegen einen anderen Weg. Die Lichtstrahlen werden beim Einkoppeln an der Lichteintrittsfläche 9.2 gebrochen und in Richtung einer zweiten Reflektorfläche 11.2 gelenkt. An dieser Reflektorfläche 11.2 werden die Lichtstrahlen des zweiten Lichtbündels 8.2 reflektiert und in Richtung der Zielfläche 17 gelenkt. Das Lichtbündel 8.2 durchtritt dabei die Umlenkfläche 10, wobei die Lichtstrahlen dort erneut gebrochen werden. Insoweit findet einen Zonentausch statt, da das Licht mit einer hohen Lichtstärke von einem zunächst weiter innen liegenden Bereich in einen weiter außen liegenden Bereich gelenkt wird und das Licht mit einer niedrigeren Lichtstärke von außen nach innen gelenkt wird. Beide Lichtbündel 8.1, 8.2 werden dann an der Lichtquelle 3 abgewandten Seite des Abstrahlelementes 4 wieder aus diesem ausgekoppelt und in Richtung der Zielfläche 17 emittiert. Der Strahlengang beruht dabei insbesondere auf dem Prinzip der fortgeschrittenen Köhler-Beleuchtung. Für das Lichtbündel 8.1 dient die Lichteintrittsfläche 9.1 als Kollimator, die Umlenkfläche 10 als ersten Mikrolinsenarray, die erste Reflektorfläche 11.1 als zweites Mikrolinsenarray und die Lichtaustrittsfläche 14.1 als Kondensor. Für das Lichtbündel 8.2 dient hingegen die Lichteintrittsfläche 9.2 als Kollimator, die zweite Reflektorfläche 11.2 als ersten Mikrolinsenarray, die Umlenkfläche 10 als zweites Mikrolinsenarray und die Lichtaustrittsfläche 14.2 als Kondensor. Durch die auf diese Weise resultierende Faltung des Strahlengangs ist die Köhler-Beleuchtung nicht mehr linear angeordnet, so dass sich eine insgesamt deutlich reduzierte Bauhöhe ergibt. Ein besonderer Vorteil liegt zudem darin, dass die Köhler-Beleuchtung durch ein einziges optisches Element ermöglicht wird.

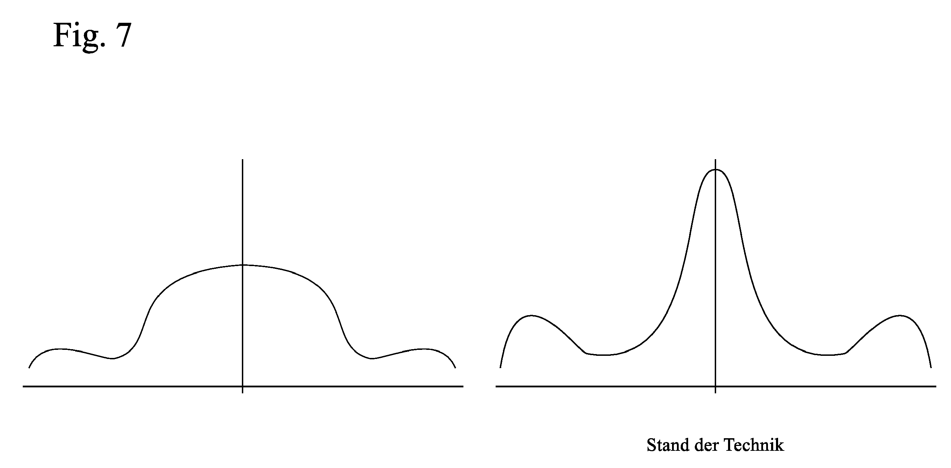

In der Fig. 7 ist auf der linken Seite schematisch die Leuchtdichteverteilung der erfindungsgemäßen Abstrahleinheit 1 im Vergleich zu der auf der rechten Seite der Fig. 7 gezeigte Leuchtdichteverteilung einer aus dem Stand der Technik bekannten Abstrahleinheit dargestellt. Wie dies der Darstellung zu entnehmen ist, weist die erfindungsgemäße Abstrahleinheit 1 einen niedrigeren Beleuchtungsstärkegradienten als die bekannte Abstrahleinheit auf. Auf diese Weise ergibt sich auf der Zielfläche 17 eine homogenere Leuchtdichteverteilung, welche unempfindlicher gegen Schattenbildung ist. Im Gegensatz zu dem Stand der Technik können durch die erfindungsgemäße Leuchtdichteverteilung Elemente hinterleuchtet werden.

Die vorstehend beschriebene Abstrahleinheit 1 und die Operationsleuchte 2 umfassen ein Abstrahlelement 4 zur Homogenisierung der Leuchtdichteverteilung des Abstrahlfeldes 5. Die Lichtanteile der Lichtquelle 3 mit einer höheren Lichtstärke werden in einen weiter außen liegenden Bereich des Abstrahlfeldes 5 und die Lichtanteile mit einer niedrigeren Lichtstärke in einen weiter innen liegenden Bereich des Abstrahlfeldes 5 gelenkt. Hierdurch kann der Beleuchtungsstärkegradient verringert werden und insgesamt eine homogenere Leuchtdichteverteilung erreicht werden. Die Abstrahleinheit 1 wird insgesamt unabhängiger gegenüber Fertigungstoleranzen. Durch die Facettierung der Reflektorflächen 11.1, 11.2 sowie der Umlenkfläche 10 kann bei gleichzeitig geringer Bauhöhe eine Köhler-Beleuchtung realisiert werden.

### Bezugszeichen:

- 1: Abstrahleinheit
- 2: Leuchte
- 3: Lichtquelle
- 4: Abstrahlelement
- 5: Abstrahlfeld
- 6: Erste Zone
- 7: Zweite Zone
- 8.1, 8.2: Lichtbündel
- 9.1, 9.2: Lichteintrittsfläche
- 10: Umlenkfläche
- 11.1: Erste Reflektorfläche
- 11.2: Zweite Reflektorfläche
- 12: Seitenfläche
- 13: Reflektorring
- 14.1: Abstrahlfläche
- 14.2: Abstrahlfläche
- 14.3: Abstrahlfläche
- 15: Dritte Zone
- 16: Linse
- 17: Zielfläche
- 18.1: Facetten der ersten Reflektorfläche
- 18.2: Facetten der zweiten Reflektorfläche
- 18.3: Facetten der Umlenkfläche

- A: optische Achse
- R: Hauptabstrahlrichtung

## Patentansprüche

1. Abstrahleinheit für eine Leuchte (2) mit einer Lichtquelle (3) und einem der Lichtquelle (3) nachgeschalteten Abstrahlelement (4) zur Erzeugung eines Abstrahlfelds (5),
**dadurch gekennzeichnet,**
**dass** das Abstrahlelement (4) zum Homogenisieren der Leuchtdichteverteilung des Abstrahlfelds (5) derart ausgebildet ist, dass Lichtanteile der Lichtquelle (3) mit einer höheren Lichtstärke in einen weiter außen liegenden Bereich des Abstrahlfelds (5) und Lichtanteile mit einer niedrigeren Lichtstärke in einen weiter innen liegenden Bereich des Abstrahlfelds (5) gelenkt werden.

2. Abstrahleinheit nach Anspruch 1, **dadurch gekennzeichnet, dass** die Homogenisierung der Leuchtdichteverteilung in einer Abstrahlebene senkrecht zur Hauptabstrahlrichtung (R) der Abstrahleinheit (1) erfolgt.

3. Abstrahleinheit nach einem der vorhergehenden Ansprüche, **dadurch gekennzeichnet, dass** die Lichtanteile der Lichtquelle (3) mit einer höheren Lichtstärke auf eine größere Abstrahlfläche (14.1) gelenkt werden als die Lichtanteile der Lichtquelle (3) mit einer niedrigeren Lichtstärke.

4. Abstrahleinheit nach einem der vorhergehenden Ansprüche, **dadurch gekennzeichnet, dass** die Lichtanteile der Lichtquelle (3) mit einer höheren Lichtstärke einer ersten Zone (6) und die Lichtanteile mit einer niedrigeren Lichtstärke einer zweiten Zone (7) zugeordnet sind.

5. Abstrahleinheit nach einem der vorhergehenden Ansprüche, **dadurch gekennzeichnet, dass** die Lichtanteile der Lichtquelle (3) mit einer höheren Lichtstärke und die Lichtanteile mit einer niedrigeren Lichtstärke in getrennte Lichtbündel (8.1, 8.2) aufgespalten werden, insbesondere wobei sich die getrennten Lichtbündel (8.1, 8.2) kreuzen.

6. Abstrahleinheit nach Anspruch 5, **dadurch gekennzeichnet, dass** die Lichtstrahlen des Lichtbündels (8.1) der höheren Lichtstärke an einer Umlenkfläche (10) zumindest teilweise senkrecht zur Hauptabstrahlrichtung (R) umgelenkt werden, insbesondere wobei die Lichtstrahlen des Lichtbündels (8.1) der ersten Zone (6) an der Umlenkfläche (10) reflektiert, bevorzugt totalreflektiert, werden.

7. Abstrahleinheit nach Anspruch 6, **dadurch gekennzeichnet, dass** die Umlenkfläche (10) für die Lichtstrahlen des Lichtbündels (8.2) der zweiten Zone (7) durchlässig ist.

8. Abstrahleinheit nach einem der Ansprüche 4 bis 7, **gekennzeichnet durch** eine erste Reflektorfläche (11.1) zum Umlenken des Lichtbündels (8.1) der ersten Zone (6) und/oder eine zweite Reflektorfläche (11.2) zum Umlenken des Lichtbündels (8.2) der zweiten Zone (7).

9. Abstrahleinheit nach Anspruch 8, **dadurch gekennzeichnet, dass** die Umlenkfläche (10) und/oder die erste Reflektorfläche (11.1) und/oder die zweite Reflektorfläche (11.2) zumindest in Teilbereichen facettiert ausgebildet ist.

10. Abstrahleinheit nach Anspruch 9, **dadurch gekennzeichnet, dass** die Anzahl der Facetten (18.3) der Umlenkfläche (10) der Anzahl der Facetten (18.1) der ersten Reflektorfläche (11.1) entspricht und/oder die Anzahl der Facetten (18.3) der Umlenkfläche (10) größer oder gleich der Anzahl der Facetten (18.2) der zweiten Reflektorfläche (11.2) ist.

11. Abstrahleinheit nach einem der vorhergehenden Ansprüche, **dadurch gekennzeichnet, dass** das Abstrahlelement (4) nach dem Prinzip der Köhler-Beleuchtung ausgebildet ist.

12. Abstrahleinheit nach einem der Ansprüche 8 bis 11, **dadurch gekennzeichnet, dass** die erste Reflektorfläche (11.1) und/oder die zweite Reflektorfläche (11.2) und/oder die Umlenkfläche (10) als Mikrolinsenarrays ausgebildet sind.

13. Abstrahleinheit nach einem der vorhergehenden Ansprüche, **dadurch gekennzeichnet, dass** das Abstrahlelement (4) mehrere Reflektorringe (13) umfasst.

14. Abstrahleinheit nach Anspruch 13, **dadurch gekennzeichnet, dass** die Reflektorringe (13) stufenförmig gegeneinander versetzt angeordnet sind.

15. Abstrahleinheit nach einem der vorhergehenden Ansprüche, **dadurch gekennzeichnet, dass** die Lichtanteile der Lichtquelle (3) mit einer höheren Lichtstärke über eine insbesondere sphärisch oder flach ausgebildete erste Lichteintrittsfläche (9.1) und die Lichtanteile mit einer niedrigeren Lichtstärke über eine insbesondere zylindrisch ausgebildete zweite Lichteintrittsfläche (9.2) einkoppelbar sind.

16. Operationsleuchte, **gekennzeichnet durch** eine Abstrahleinheit (1) nach einem der vorhergehenden Ansprüchen.
